# EUROPÄISCHE PATENTSCHRIFT

(11) **EP 0 445 592 B1**
(45) Veröffentlichungstag und Bekanntmachung des Hinweises auf die Patenterteilung: **06.11.1996**
(21) Anmeldenummer: 91102529.4
(22) Anmeldetag: 21.02.1991
(51) Int. Cl.: B29C 49/00

(54) **Verfahren zur Herstellung eines Hohlkörpers aus einem Schaumstoff**
Method of making a hollow article out of foam material
Procédé pour la fabrication d'un corps-creux en matière cellulaire

(30) Priorität: 03.03.1990 DE 4006729
(43) Veröffentlichungstag der Anmeldung: 11.09.1991
(73) Patentinhaber: HT TROPLAST AG, D-53839 Troisdorf (DE)
(72) Erfinder: Breitscheidel, Hans-Ulrich, W-5200 Siegburg (DE); Spiess, Karl-Heinz, W-5203 Much (DE)

(56) Entgegenhaltungen:
- EP-A- 0 281 971
- DE-A- 3 712 973
- US-A- 3 225 127

## Beschreibung

Die Erfindung betrifft ein Verfahren zur Herstellung von Formteilen aus einem thermoplastischen oder elastomeren, unter Anwendung von Druck und Wärme bleibend verformbaren Schaumstoff.

Aus der DE-A-3 712 973 ist ein Verfahren zur Herstellung von Hohlkörperformteilen aus thermoplastischen bzw. elastomeren, unter Anwendung von Druck und Wärme bleibend verformbaren Schaumstoffen bekannt, bei dem zunächst ein nahtloser rohr- bzw. hohlkörperförmiger Vorformling gebildet, der Vorformling auf eine unterhalb des thermoplastischen Zustandsbereichs liegende Temperatur erwärmt und der erwärmte Vorformling in einem Formwerkzeug mit heißer Luft aufgeblasen und entsprechend der Kontur des Formwerkzeugs geformt wird. Ein ähnliches Verfahren wird in der US-A-3 225 127 beschrieben.

Ein Nachteil dieses bekannten Verfahrens ist es, daß die Naht des Vorformlings beim Aufblasen hohen Zugspannungen ausgesetzt ist, so daß diese ggf. reißen kann. Weiterhin ist dieses Verfahren nur für annähernd symmetrische Formkörper geeignet, da sich der Vorformling nur in begrenztem Maße dehnen läßt.

Aufgabe der Erfindung ist es, ein Verfahren zur Herstellung eines Hohlkörpers aus einem Schaumstoff zur Verfügung zu stellen, daß die genannten Nachteile vermeidet.

Die Erfindung löst diese Aufgabe durch die Verfahrensschritte des Anspruchs 1, bevorzugt in Verbindung mit einem oder mehreren der Merkmale der Unteransprüche.

Wesentliches Merkmal der vorliegenden Erfindung ist es, daß nicht - wie beim Stand der Technik - von einem Vorformling ausgegangen wird, sondern von insbesondere zwei Abschnitten des Schaumstoffmaterials. Die Abschnitte des Schaumstoffs werden zunächst auf eine Temperatur oberhalb der Erweichungstemperatur des Schaumstoffs, d. h. auf eine Temperatur, bei der der Schaumstoff unter Anwendung von Druck und Wärme bleibend verformt werden kann, erhitzt. Anschließend werden die erhitzten Abschnitte in die mehrteilige Form eingelegt. Im allgemeinen wird man zwei etwa gleich große Schaumstoffabschnitte übereinandergelegt in die Form einbringen. Ggf. kann jedoch auch ein einziger Abschnitt in der Mitte gefaltet und entsprechend in die Form eingelegt werden.

Durch Schließen der mehrteiligen Form werden die Abschnitte entlang ihrer Kanten miteinander verbunden. Bevorzugt werden sie dabei miteinander verschweißt, so daß der Zwischenraum zwischen den Abschnitten vollständig (mit Ausnahme der Einblasöffnung) abgedichtet wird.

Anschließend wird durch Einführen eines unter Druck stehenden Fluids, insbesondere von Druckluft, in den Zwischenraum die Abschnitte an die Wandungen der mehrteiligen Form gedrückt und dabei ausgeformt.

Bevorzugt wird hierzu kalte oder unterhalb der Erweichungstemperatur des Schaumstoffs erwärmte Luft bei einem Druck von 0,2 bis 1 bar, bevorzugt 0,3 bis 0,5 bar, verwendet.

Nach Abkühlen der Abschnitte wird das Formteil anschließend entformt.

Ein wesentlicher Vorteil des erfindungsgemäßen Verfahrens ist es, daß die Naht bzw. Nähte des Hohlkörpers, die beim Schließen der Form entstehen, beim Ausformen des Hohlkörpers nur relativ geringen Dehnungen unterworfen sind. Weiterhin ermöglicht es das erfindungsgemäße Verfahren, auch stark asymmetrisch ausgebildete Formteile herzustellen, da die Zuschnitte auch beispielsweise trapezförmige, ovale oder sonstige Formen aufweisen können. Durch Anpassen der Zuschnittgröße an die gewünschte Form des Hohlkörpers kann eine gleichmäßige Streckung des verwendeten Materials bei der Ausformung erreicht werden.

Ggf. kann die Abtrennung der Nahtüberstände durch in das Werkzeug integrierte Schneidkanten erfolgen.

Soweit im Endprodukt gewünscht, können die verwendeten Schaumstoffzuschnitte auch unterschiedliche Rohdichten aufweisen. Weiterhin ist es möglich, einen oder beide der Zuschnitte mit weiteren Schichten zu kaschieren, beispielsweise mit kompakten Thermoplast-Folien, weiteren Schaumstoffen etc.

Es hat sich überraschend herausgestellt, daß bei Verwendung von chemisch vernetztem Polyethylenschaumstoff - im Gegensatz zur Verwendung von physikalisch vernetztem Schaumstoff - kein Verkleben der beiden Schaumstoffzuschnitte aneinander erfolgt, so daß beim Aufblasen des Zwischenraums zwischen den Zuschnitten eine Trennung der beiden Zuschnitte möglich ist.

Die Erfindung wird nachfolgend anhand eines Ausführungsbeispiels sowie der Zeichnung näher erläutert.

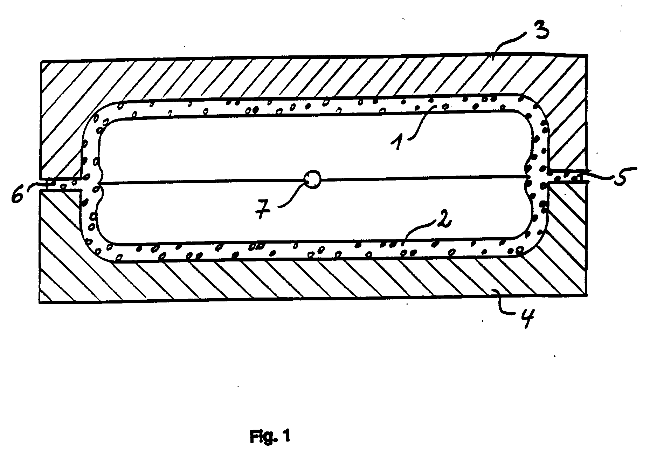

Es zeigt dabei
- Fig. 1 -: zwei Schaumstoffzuschnitte in der mehrteiligen Form beim Aufblasen.

Zwei Zuschnitte 1, 2 eines vernetzten, geschlossenzelligen Polyethylenschaumstoffs mit einer Rohdichte von 130 kg/m³ und einer Dicke von 6 mm werden auf eine Temperatur von 160° C erwärmt und in einem zweiteiligen Hohlkörperwerkzeug 3, 4 eingelegt. Durch Schließen der Form werden die Zuschnitte 1, 2 entlang ihrer Kanten 5, 6 miteinander verschweißt und verpreßt. Der Hohlraum zwischen den Zuschnitten 1, 2 wird hierdurch mit Ausnahme der Einblasöffnung 7 hermetisch abgedichtet.

Nach Schließen der Form wird Blasluft bei Raumtemperatur mit einem Druck von 0,5 bar (Überdruck gegenüber der Umgebungsatmosphäre) in den Zwischenraum zwischen die Zuschnitte 1, 2 eingebracht. Hierdurch werden die Zuschnitte an die Innenwände des Hohlkörperwerkzeuges 3, 4 angepreßt. Nach Abkühlen des Hohlkörpers und Entnahme aus dem Werkzeug werden die Nahtüberstände abgetrennt und zwei Öffnungen angebracht für den Einsatz des Formteils als Luftkanal in Kraftfahrzeugen. Die Verbindungsstelle der beiden Zuschnitte hat den starken Ausformungsdehnungen widerstanden und stellt auch beim Einsatz des Luftkanals keine Schwachstelle dar.

## Patentansprüche

1. Verfahren zum Herstellen eines Hohlkörpers aus einem thermoplastischen oder elastomeren, unter Anwendung von Druck und Wärme bleibend verformbaren Schaumstoff, mit folgenden Verfahrensschritten:
- ein oder mehrere im wesentlichen ebene, plattenförmige Abschnitte (1, 2) eines Schaumstoffs werden nach Erwärmung auf eine Temperatur oberhalb der Erweichungstemperatur des Schaumstoffs in eine mehrteilige Form (3, 4) eingelegt;
- durch Schließen der mehrteiligen Form (3, 4) werden die Abschnitte (1, 2) entlang ihrer Kanten (5, 6) miteinander verbunden, wobei der Zwischenraum zwischen den Abschnitten (1, 2) wenigstens weitgehend abgedichtet wird;
- durch Einführen eines unter Druck stehenden Fluids in den Zwischenraum zwischen den Abschnitten (1, 2) werden die Abschnitte (1, 2) an die Wandungen der mehrteiligen Form (3, 4) gedrückt und ausgeformt;
- nach Abkühlen der Abschnitte (1, 2) wird das Formteil entformt.

2. Verfahren nach Anspruch 1, ***dadurch gekennzeichnet***, daß die Abschnitte (1, 2) durch Schließen der mehrteiligen Form (3, 4) entlang ihrer Kanten (5, 6) miteinander verschweißt werden.

3. Verfahren nach einem der Ansprüche 1 oder 2, ***gekennzeichnet durch*** die Verwendung eines chemisch vernetzten Polyolefin-Schaumstoffs einer Rohdichte von 30 bis 250 kg/m³.

4. Verfahren nach einem der Ansprüche 1 bis 3, ***gekennzeichnet durch*** eine Temperatur von 130 bis 200° C, bevorzugt 150 bis 170° C der Abschnitte (1, 2) beim Einlegen in die mehrteilige Form (3, 4).

## Claims

1. Method for the production of a hollow body formed of a thermoplastic or elastomeric foam material remaining deformable when subject to pressure and heat, having the following processing steps:
- one or several essentially flat plate-shaped sections (1, 2) of a foam material are laid in a multipart mould (3, 4) after heating to a temperature above the softening temperature of the foam material;
- the sections (1, 2) are connected with one another along their edges (5, 6) by closing the multipart mould (3, 4), with the intermediate space between the sections (1, 2) being at least largely sealed off;
- the sections (1, 2) are pressed onto the walls of the multi part mould (3, 4) by introduction of a fluid under pressure into the intermediate space between the sections (1, 2) and blocked;
- after cooling of the sections (1, 2), the shaped part is deformed.

2. Method according to claim 1, characterised in that the sections (1, 2) are welded with one another along their edges (5, 6) as a result of closing the multipart mould (3, 4).

3. Method according to one of claims 1 or 2, characterised by the use of a chemically crossed-linked polyolefin foam material having a bulk density of 30 to 250 kg/m³.

4. Method according to one of claims 1 to 3, characterised by a temperature of 130 to 200°C, preferably 150 to 170°C for the sections (1, 2) on insertion in the multi part mould (3, 4).

## Revendications

1. Procédé de préparation d'un corps creux à partir d'une mousse thermoplastique ou élastomère, déformable de façon permanente sous l'influence de la chaleur et de la pression, ce procédé comprenant les étapes suivantes :
- on introduit dans un moule en plusieurs parties (3, 4), un ou plusieurs morceaux de mousse essentiellement planes et en forme de plaques (1, 2), après les avoir réchauffés à une température au-dessus de la température de ramollissement de la mousse ;
- on relie l'un à l'autre les morceaux (1, 21) le long de leurs côtés (5, 6), par la fermeture du moule en plusieurs parties (3, 4), l'espace intermédiaire entre les morceaux (1, 2) étant ainsi rendu, au moins dans une grande mesure, étanche ;
- on introduit un fluide sous pression dans l'espace intermédiaire formé entre les morceaux (1, 2), ce qui fait que les morceaux (1, 2) sont pressés contre les parois du moule comprenant plusieurs parties (3, 4) et sont mis en forme ;
- après refroidissement des morceaux (1, 2), on démoule le corps mis en forme.

2. Procédé selon la revendication 1, caractérisé par le fait que les morceaux (1, 2) sont soudés l'un à l'autre, le long de leur côté (5, 6) par la fermeture du moule en plusieurs parties (3, 4).

3. Procédé selon la revendication 1 ou 2, caractérisé par le fait qu'on utilise une mousse de polyéthylène chimiquement réticulée, ayant une densité de 30 à 250 kg/m³.

4. Procédé selon l'une des revendications 1, 2 ou 3, caractérisé par le fait que la température des morceaux (1, 2) lors de leur placement dans le moule en plusieurs parties (3, 4) est comprise entre 130 et 200°C, et de préférence entre 150 et 170°C.
